# EUROPÄISCHE PATENTSCHRIFT

(11) **EP 4 347 225 B1**
(45) Veröffentlichungstag und Bekanntmachung des Hinweises auf die Patenterteilung: **18.12.2024**
(21) Anmeldenummer: 22727246.5
(22) Anmeldetag: 27.05.2022
(51) Int. Cl.: B29C 65/08, B29C 65/16, B29C 65/18, B29C 65/34, B29C 65/36, B29L 31/30, B29K 105/06

(54) **VERFAHREN ZUM FÜGEN VON FASER-KUNSTSTOFF-VERBUND-BAUTEILEN UND STABILISIERUNGSVORRICHTUNG**
METHOD FOR JOINING FIBER-PLASTIC COMPOSITE COMPONENTS, AND STABILIZING DEVICE
MÉTHODE D'ASSEMBLAGE DE COMPOSANTS COMPOSITES FIBRE-PLASTIQUE ET DISPOSITIF DE STABILISATION

(30) Priorität: 27.05.2021 AT 504232021
(43) Veröffentlichungstag der Anmeldung: 10.04.2024
(73) Patentinhaber: FACC AG, 4910 Ried im Innkreis (AT)
(72) Erfinder: GÜROCAK, Maximilian, 94032 Passau (DE); ETZL, Christoph, 4770 Andorf (AT); LANG, Markus, 4910 Pattigham (AT)
(74) Vertreter: SONN Patentanwälte GmbH & Co KG
(86) Internationale Anmeldenummer: PCT/AT2022/060182
(87) Internationale Veröffentlichungsnummer: WO 2022/246490

(56) Entgegenhaltungen:
- EP-A2- 1 070 661
- WO-A2-2019/094428
- DE-A1- 102019 111 226

## Beschreibung

Die Erfindung betrifft ein Verfahren zum Fügen von Faser-Kunststoff-Verbund-(FKV)-Bauteilen, insbesondere von Flugzeug-Bauteilen, sowie ein Verfahren zur Herstellung eines Flugzeugteils, beispielsweise eines Steuerflächenelements.

Des Weiteren betrifft die Erfindung eine Stabilisierungsvorrichtung, die, insbesondere während eines Fügeprozesses, zur formerhaltenden und/oder formgebenden Stützung eines Faser-Kunststoff-Verbund-(FKV)-Bauteils in eine Ausnehmung desselben einführbar ist, und folgendes aufweist:
einen vorzugsweise länglichen Grundkörper mit einem Hohlraum, der mit einem Fluid füllbar ist,
eine Öffnung, die vorzugsweise am Grundkörper angeordnet ist, und
ein bewegliches Anpresselement zur Übertragung einer nach außen gerichteten Druckkraft auf das FKV-Bauteil, wobei das Anpresselement zumindest teilweise eine höhere Flexibilität aufweist als der Grundkörper, wobei die Druckkraft durch Füllen des Hohlraums mit dem Fluid erzeugbar ist, wobei das Anpresselement einen Sack aufweist, der innerhalb des Hohlraumes angeordnet ist und der zur Erzeugung der Druckkraft mit dem Fluid füllbar ist, wobei der Sack dazu eingerichtet ist, im gefüllten Zustand zumindest teilweise durch die Öffnung hindurchzuragen, um die Druckkraft auf eine die Ausnehmung begrenzende Begrenzungsfläche des FKV-Bauteils zu erzeugen.

Außerdem betrifft die Erfindung ein Werkzeug mit einer solchen Stabilisierungsvorrichtung.

In der Luftfahrtindustrie werden vielfach Bauteile aus Faser-Kunststoff-Verbund-Material (FKV-Material) eingesetzt, weil sie eine hohe Stabilität und ein geringes Gewicht aufweisen. Bei der Herstellung von Flugzeugteilen, wie beispielsweise eines Steuerflächenelements, werden oftmals mehrere Bauteile aus FKV-Material, im Folgenden auch als FKV-Bauteile bezeichnet, miteinander durch Fügen, wie beispielsweise durch Verschweißen, verbunden. Während des Verschweißens von FKV-Bauteilen kann es jedoch durch die eingebrachte Wärme und den aufgewendeten Druck zu unerwünschten Verformungen der FKV-Bauteile kommen. Dies kann insbesondere bei verstärkenden Strukturen mit Hohlprofilen zu Problemen führen, weil diese bei fehlendem Gegendruck während des Schweißprozesses in sich zusammensacken und so ihre Form und damit ihre verstärkende Wirkung verlieren können.

Aus dem Stand der Technik ist bekannt, eine aufblasbare oder mit einer Flüssigkeit füllbare Blase aus Silikonkautschuk in Hohlräume von Bauteilen aus FKV-Material einzuführen, um sie dadurch während eines Schweißprozesses zu stärken. Ein solches Verfahren ist aus US 5,710,414 A bekannt. Nachteilig ist, dass die flexible Blase in alle Richtungen gleichmäßig einen Druck auf das umliegende Bauteil ausübt. Das Bauteil kann daher auch auf unerwünschte Weise verformt werden, weil durch die Blase auch Drucckräfte auf Stellen ausgeübt werden, die keinen Gegendruck durch das Schweißen erfahren. Gelangt Wärme des Schweißprozesses zu diesen Stellen, werden diese aufgeweicht und durch die unter Druck stehende Blase verformt. Weiters kann die Blase aufgrund ihrer Flexibilität nur schwer gezielt in engen Hohlräumen platziert werden. Außerdem kann sie einreißen und an heißen Stellen aufschmelzen und platzen.

Vorrichtungen und Verfahren zum Bearbeiten und Stabilisieren von Bauteilen während der Herstellung sind aus US 2019/0275747 A1, EP 3 711 933 A1, US 2017/0036310 A1, US 5,366,684 A und US 2005/0035115 A1 bekannt.

Die EP 1 070 661 A2 offenbart eine Hilfsvorrichtung, die beim Verbinden von FKV-Bauteilen eingesetzt werden kann. Die Hilfsvorrichtung besitzt mehrere Blasen, die mittels eines Fluids aufgeblasen werden können, um gegen die FKV-Bauteile zu drücken.

Die WO 2019/094428 A2 betrifft die Herstellung eines Rotorblattes für eine Windturbine. Bei der Herstellung wird eine interne Blase eingesetzt, mit der thermoplastisches Material geformt.

Im Lichte dieser Ausführungen ist es daher Aufgabe der vorliegenden Erfindung, die Nachteile des Standes der Technik zumindest teilweise zu lindern. Bevorzugt ist es Aufgabe der Erfindung, ein Verfahren und eine Stabilisierungsvorrichtung der eingangs erwähnten Art zur Verfügung zu stellen, mit denen eine zielgerichtete und formerhaltende Stabilisierung eines FKV-Bauteils während des Fügens, insbesondere während eines Schweißprozesses, ermöglicht wird. Die Stabilisierungsvorrichtung soll dabei leicht und präzise in Hohlräume einführbar sein.

Gelöst wird diese Aufgabe zunächst durch ein Verfahren nach Anspruch 1. Erfindungsgemäß weist das Verfahren die folgenden Schritte auf:
i) Bereitstellen eines ersten und eines zweiten FKV-Bauteils, wobei das erste FKV-Bauteil eine Ausnehmung aufweist;
ii) Einführen einer Stabilisierungsvorrichtung in die Ausnehmung des ersten FKV-Bauteils, wobei die Stabilisierungsvorrichtung einen vorzugsweise länglichen Grundkörper mit einem Hohlraum, eine Öffnung und ein Anpresselement aufweist, welches Anpresselement zumindest teilweise eine höhere Flexibilität aufweist als der Grundkörper, wobei das Anpresselement einen Sack aufweist, der innerhalb des Hohlraumes angeordnet ist und der zur Erzeugung einer nach außen gerichteten Druckkraft mit einem Fluid füllbar ist, wobei der Sack im gefüllten Zustand dazu eingerichtet ist, zumindest teilweise durch die Öffnung hindurchzuragen, um die Druckkraft auf eine die Ausnehmung begrenzende Begrenzungsfläche des ersten FKV-Bauteils zu erzeugen, wobei das Anpresselement weiters ein Wärmeisolierelement aufweist, welches an der Außenseite des Grundkörpers angeordnet ist, sodass die Druckkraft über das Wärmeisolierelement auf das erste FKV-Bauteil übertragbar ist;
iii) Füllen des Hohlraums mit dem Fluid, sodass das Anpresselement gegen die die Ausnehmung begrenzende Begrenzungsfläche des ersten FKV-Bauteils gedrückt wird;
iv) Verbinden des ersten FKV-Bauteils mit dem zweiten FKV-Bauteil an einer Verbindungsstelle durch Fügen, insbesondere durch Verschweißen, wobei mit dem Anpresselement zur Stabilisierung der Form der Ausnehmung der nach außen gerichtete Drucckraft auf die Verbindungsstelle ausgeübt wird.

Vorteilhafterweise kann mit dem Anpresselement eine Druckkraft zielgerichtet auf die Verbindungsstelle, welche beispielsweise eine Schweißstelle ist, ausgeübt werden und so die Form der Ausnehmung und damit des ersten FKV-Bauteils während des Fügens, insbesondere Verschweißens, erhalten werden. Das Anpresselement wird dabei vom Grundkörper aus betrachtet nach außen gegen die Begrenzungsfläche an der Innenseite des ersten FKV-Bauteils und somit gegen die Verbindungsstelle gedrückt, während die Form des Grundkörpers im Wesentlichen erhalten bleibt. Dies ist darauf zurückzuführen, dass das Anpresselement flexibler ausgestaltet ist als der Grundkörper, d.h. eine geringere Steifigkeit aufweist. Der Grundkörper behält somit im Wesentlichen seine Form bei, während das Anpresselement die Druckkraft auf die Begrenzungsfläche an der Innenseite des ersten FKV-Bauteils ausübt, an deren Außenseite sich die Verbindungsstelle befindet. Die Drucckraft ist dabei (von einem Zentrum der Stabilisierungsvorrichtung aus betrachtet) nach außen gerichtet. Somit übt die Stabilisierungsvorrichtung eine Druckkraft auf das erste FKV-Bauteil aus. Durch die höhere Flexibilität ist das Anpresselement gegenüber dem Grundkörper auslenkbar. Bevorzugt ist das Anpresselement elastisch verformbar. Vorteilhafterweise findet dadurch auch ein Toleranzausgleich bei Bauteilfehlern statt. Die Flexibilität des Anpresselements kann insbesondere dadurch erreicht werden, dass das Anpresselement zumindest teilweise ein Material aufweist, das flexibler, d.h. weniger steif, ist als das Material des Grundkörpers. Es kann auch vorgesehen sein, dass das Anpresselement und der Grundkörper aus dem gleichen Material oder einem ähnlich steifen Material bestehen, das Anpresselement aber ein Gelenk aufweist oder eine dünnere Wandstärke aufweist als der Grundkörper. Durch eine entsprechend dünne Wandstärke kann auch mit an sich harten und steifen Materialien eine hinreichende Flexibilität des Anpresselements erreicht werden. Während das Anpresselement gegen die Begrenzungsfläche am ersten FKV-Bauteil gedrückt wird, ändert sich die Form des Grundkörpers allenfalls nur geringfügig. Im Unterschied dazu wird beim Stand der Technik, wie beispielsweise bei der US 5,710,414 A, die Druckkraft der Stabilisierungsvorrichtung in alle Richtungen gleichmäßig abgegeben, sodass das Hohlprofil auf unerwünschte Weise verformt werden kann. Das erste und das zweite FKV-Bauteil bestehen zumindest teilweise, vorzugsweise vollständig, aus einem Faser-Kunststoff-Verbund-Material. Als Faser-Kunststoff-Verbund-Material (FKV-Material) wird in dieser Offenbarung ein Werkstoff bezeichnet, der aus Verstärkungsfasern und einer Kunststoffmatrix besteht. Beispiele für FKV-Materialien, aus denen die FKV-Bauteile teilweise oder vollständig bestehen können, sind kohlenstofffaserverstärkter Kunststoff (CFK) oder glasfaserverstärkter Kunststoff (GFK). Das erste FKV-Bauteil und das zweite FKV-Bauteil können beispielsweise Bauteile eines zu erzeugenden Steuerflächenelements für ein Flugzeug, beispielsweise eines Spoilers oder eines Droop-Panels, sein. Die Stabilisierungsvorrichtung wird erfindungsgemäß in eine Ausnehmung des ersten FKV-Bauteils eingeführt. Das erste FKV-Bauteil kann eine Verstärkungsstruktur mit einem oder mehreren Hohlprofilen aufweisen, wobei die Ausnehmung durch das oder eines der Hohlprofile gebildet ist. Die Hohlprofile und damit die Ausnehmung können hinterschnitten oder nicht hinterschnitten sein. Bei der Ausnehmung kann es sich beispielsweise um ein Loch, um einen Hohlraum oder um eine Wölbung des ersten FKV-Bauteils handeln. Da bei Bauteilen für Flugzeuge häufig Verstärkungsstrukturen eingesetzt werden (siehe zum Beispiel WO 2016/023056 A1 als Beispiel für eine verstärkende Struktur), ist es günstig, wenn der Grundkörper eine längliche Form aufweist, um ganze Bereiche solcher Strukturen während des Fügens zu stützen und um das Einführen zu erleichtern. Der Grundkörper weist erfindungsgemäß einen Hohlraum auf, der mit einem flüssigen und/oder gasförmigen Fluid füllbar ist. Der Hohlraum liegt vorzugsweise innerhalb des Grundkörpers. Das Fluid kann beispielsweise Luft, Wasser oder Öl sein. Weiters besitzt die Stabilisierungsvorrichtung eine Öffnung, die vorzugsweise am Grundkörper angeordnet ist. Durch die Öffnung kann das Fluid im eingeführten Zustand der Stabilisierungsvorrichtung die Druckkraft auf die Begrenzungsfläche und damit auf die Verbindungsstelle übertragen. Die Öffnung verbindet den Hohlraum mit dem Äußeren der Stabilisierungsvorrichtung und kann in einer Ausführungsform frei, d.h. nicht abgedeckt, sein. Alternativ kann die Öffnung abgedeckt sein, beispielsweise durch eine vorzugsweise flexible Wandstruktur oder durch ein Folienelement. Wichtig ist nur, dass die Druckkraft vom Fluid durch die Öffnung nach außen übertragen werden kann. Durch das Füllen des Hohlraums mit dem Fluid wird das Anpresselement gegen die Begrenzungsfläche an der Innenseite des ersten FKV-Bauteils und damit gegen die Verbindungsstelle gedrückt, da das Anpresselement eine höhere Flexibilität besitzt als der Grundkörper. Die Form des Grundkörpers bleibt somit, wie bereits ausgeführt, im Wesentlichen erhalten, während das Anpresselement sich zumindest teilweise verformt und gegen die Begrenzungsfläche gedrückt wird. Das Material, aus dem das Anpresselement zumindest teilweise besteht, kann beispielsweise ein Folienmaterial oder ein gummiartiges Material sein. Während das Anpresselement gegen die Begrenzungsfläche und damit gegen die Verbindungsstelle drückt, können der erste FKV-Bauteil und der zweite FKV-Bauteil miteinander verschweißt werden. Vorteilhafterweise wird durch die von der Stabilisierungsvorrichtung erzeugte Druckkraft auf die Verbindungsstelle eine Formveränderung der Ausnehmung bzw. des ersten FKV-Bauteils während des Fügens verhindert. Vorzugsweise erfolgt das Fügen des ersten und des zweiten FKV-Bauteils durch Verschweißen. Beispielsweise wird zum Verschweißen des ersten FKV-Bauteils mit dem zweiten FKV-Bauteil ein Induktionsschweißprozess, ein Ultraschallschweißprozess, ein Widerstandsschweißprozess, ein Konduktionsschweißprozess oder ein Laserschweißprozess eingesetzt. Die Verbindungsstelle kann bei Verwendung eines Schweißprozesses zum Fügen auch als Schweißstelle bezeichnet werden. Die von der Stabilisierungsvorrichtung erzeugte Drucckraft wirkt als Gegendruck für den während des Verschweißens aufgebrachten Druck und wirkt dem gleichzeitig erweichenden Material, das durch Temperatureinwirkung erweicht, entgegen. Durch den Gegendruck wird die Form der Ausnehmung und damit des ersten FKV-Bauteils stabilisiert bzw. konsolidiert. In einer bevorzugten Ausführungsform ist die Druckkraft des Anpresselements im Wesentlichen nur in eine Raumrichtung gerichtet. Besonders vorteilhaft ist in den meisten Anwendungsfällen, wenn die Drucckraft im bestimmungsgemäßen Gebrauchszustand der Stabilisierungsvorrichtung, bezogen auf ein Inertialsystem, im Wesentlichen nur nach oben wirkt. Dadurch wird die Ausnehmung des ersten FKV-Bauteils von unten gestützt. Somit kann das zweite FKV-Bauteil von oben mit dem ersten FKV-Bauteil verschweißt werden, ohne die Form des ersten FKV-Bauteils zu verändern.

Das vorliegende Verfahren eignet sich somit zur Stabilisierung eines FKV-Bauteils während eines Fügeprozesses zum Verbinden zweier FKV-Bauteile. Das Fügen kann beispielsweise durch Verschweißen, Verschrauben, Vernieten oder Kleben erfolgen. Vorgesehen ist, dass das Anpresselement einen Sack aufweist, der innerhalb des Hohlraumes angeordnet ist. Der Sack kann zur Erzeugung der Druckkraft mit dem Fluid gefüllt werden, wobei der Sack im gefüllten Zustand zumindest teilweise durch die Öffnung tritt und die Druckkraft auf die Verbindungsstelle erzeugt. Der Sack kann beispielsweise aus einem Gummimaterial oder einem Kunststoffmaterial bestehen. Vorzugsweise erstreckt sich der Sack im Wesentlichen über die gesamte Länge des Hohlraums. In einer besonders bevorzugten Ausführungsform kann es sich bei dem Sack um eine Schlauchfolie handeln, die an einem Ende geschlossen ist und am anderen Ende mit einer Fluidversorgung, insbesondere einer Gasversorgung, verbunden ist. Wenn der Sack mit dem Fluid gefüllt wird (gefüllter Zustand), wird der Sack wegen seiner geringeren Flexibilität im Vergleich zum Grundkörper durch die Öffnung gepresst. Im gefüllten Zustand füllt der Sack vorzugsweise im Wesentlichen den gesamten Hohlraum des Grundkörpers aus. Der Sack ist somit derart flexibel, dass er sich im gefüllten Zustand der Form des Hohlraums im Wesentlichen anpasst.

Eine besonders leicht auszugestaltende und damit vorteilhafte Variante der Erfindung ergibt sich, wenn als Fluid ein Gas, insbesondere Luft, verwendet wird. Das Gas kann durch einen Kompressor bzw. eine Pumpe in den Hohlraum oder den Sack gefüllt werden. Wie bereits erwähnt, kann das Fluid jedoch auch durch eine Flüssigkeit, beispielsweise ein Öl oder Wasser, gebildet sein.

Für eine Stabilisierung der Ausnehmung und damit des ersten FKV-Bauteils ist es vorteilhaft, wenn das Fluid zur Erzeugung der Druckkraft unter Druck gesetzt wird und der Druck zwischen 1,0 Bar und 8,0 Bar, vorzugsweise zwischen 1,5 Bar und 5,0 Bar, insbesondere zwischen 2,0 Bar und 3,0 Bar beträgt. Durch einen solchen Druck des Fluids kann den Kräften beim Fügen, insbesondere Schweißen, effektiv entgegengewirkt werden. Bei höheren Drucckräften könnte die Ausnehmung und damit das erste FKV-Bauteil durch die Stabilisierungsvorrichtung unvorteilhafterweise verformt werden. Zu niedrige Druckkräfte (beispielsweise, je nach Bauteil, unter 1 Bar) hätten eine zu geringe Stabilisierungswirkung.

Insbesondere wenn das Fügen der FKV-Bauteile durch Verschweißen erfolgt, ist es vorteilhaft, wenn das Wärmeisolierelement, insbesondere eine Wärmeisolierplatte, während des Fügens, insbesondere Verschweißens, gegen die Begrenzungsfläche gedrückt wird. Durch das Wärmeisolierelement wird verhindert, dass die eingetragene Wärme zum Verschweißen zu schnell abgeleitet wird. Dadurch kann der Schweißprozess begünstigt werden. Außerdem wird verhindert, dass die eingetragene Wärme im ersten FKV-Bauteil abseits der Schweißstelle verteilt wird, was zur weiteren Stabilisierung des ersten FKV-Bauteils beiträgt. Das Wärmeisolierelement kann an der Außenseite des Grundkörpers beispielsweise lose angeordnet sein. Das Wärmeisolierelement kann alternativ mit dem oben beschriebenen Sack verbunden sein. In einer weiteren Ausführungsform kann das Wärmeisolierelement mit dem Grundkörper verbunden sein, beispielsweise über ein Folienelement oder ein Gummielement. Vorzugsweise besteht das Wärmeisolierelement aus Keramik oder aus einem Polymermaterial, einem FKV-Material oder Faserzement oder aus einer Mischung aus diesen Materialien. In einer besonders bevorzugten Ausführungsform ist das Wärmeisolierelement eine insbesondere plane Wärmeisolierplatte.

In einer Ausführungsform der Erfindung ist vorgesehen, dass das erste FKV-Bauteil eine Verstärkungsstruktur aufweist und die Ausnehmung zumindest teilweise durch einen Abschnitt der Verstärkungsstruktur gebildet ist. Verstärkungsstrukturen werden bei Flugzeugteilen, insbesondere bei Steuerflächenelementen wie zum Beispiel Spoiler oder Droop-Panels etc., eingesetzt. Bei dieser Ausführungsform wird die Ausnehmung durch ein Hohlprofil der Verstärkungsstruktur gebildet. Eine Verstärkungsstruktur kann beispielsweise im Querschnitt betrachtet einen oder mehrere Verbindungsstege aufweisen. Die Verstärkungsstruktur kann beispielsweise zwei Flächenelemente miteinander verbinden. Der oder die Verbindungsstege können ein Strukturmuster bilden, wobei ein Hohlprofil ausgebildet wird. Das Strukturmuster kann beispielsweise dreiecksförmig, trapezförmig, rechteckig oder wellenförmig sein. Das Strukturmuster kann einzeln vorliegen oder wiederholend fortgesetzt sein. Bei einem beispielhaften Strukturmuster sind beispielsweise zwei im Wesentlichen vertikale Verbindungsstege über einen horizontalen Verbindungssteg miteinander verbunden. Dieses Strukturmuster kann einzeln vorliegen und damit ein einzelnes Hohlprofil ausbilden. Das Strukturmuster kann aber auch wiederholend fortgesetzt werden und mehrere Hohlprofile ausbilden.

Um allfälligen unbeabsichtigten Verschiebungen der FKV-Bauteile entgegenzuwirken, ist es günstig, wenn zumindest das erste FKV-Bauteil während des Fügens fixiert wird.

Bei einer Ausführungsform kann vorgesehen sein, dass die Verbindungsstelle vor dem Fügen, während des Fügens und/oder nach dem Fügen durch das Fluid gekühlt oder erwärmt wird, vorzugsweise wobei das Fluid zirkuliert wird. Das Kühlen oder Erwärmen einer Verbindungsstelle ist bei einem Schweißprozess zum Fügen besonders vorteilhaft. Das Fluid kann flüssig oder gasförmig sein. Bei einer besonders bevorzugten Ausführungsform kann vorgesehen sein, dass das Fluid zwischen einer Temperaturregelvorrichtung, insbesondere einer Kühl- und/oder Heizvorrichtung, und dem Hohlraum zirkuliert wird. Dadurch wird Wärmeenergie von dem ersten FKV-Bauteil abgeleitet oder diesem zugeführt. Die Temperaturregelvorrichtung kann das Fluid bei der Zirkulation beispielsweise in einem Temperaturbereich halten.

Die Erfindung betrifft weiters ein Verfahren zur Herstellung eines Flugzeugteils, beispielsweise eines Steuerflächenelements, insbesondere eines Spoilers, mit den Schritten:
i) Anordnen eines ersten Flächenelements aus FKV-Material auf einem Tisch;
ii) Auflegen eines Zwischenelements mit einer Verstärkungsstruktur aus FKV-Material auf das erste Flächenelement;
iii) Verbinden des Zwischenelements mit dem ersten Flächenelement durch Fügen, insbesondere Verschweißen, an zumindest einer Verbindungsstelle, um einen ersten FKV-Bauteil zu erhalten;
iv) Auflegen eines zweiten FKV-Bauteils in Form eines zweiten Flächenelements auf das erste FKV-Bauteil;
v) Verbinden des ersten FKV-Bauteils mit dem zweiten FKV-Bauteil durch Anwenden des Verfahrens zum Fügen von Faser-Kunststoff-Verbund-(FKV)-Bauteilen in einer der oben beschriebenen Ausführungsvarianten.

Das Steuerflächenelement kann beispielsweise ein Spoiler oder ein Droop-Panel sein. Bei dem ersten Flächenelement kann es sich beispielsweise um eine obere oder untere Außenhaut (engl. "upper skin", "lower skin") einer Störklappe (engl. "Spoiler") handeln. Bei dem zweiten Flächenelement kann es sich korrespondierend zum ersten Flächenelement um die jeweils andere der oberen oder unteren Außenhaut handeln. Bei der Verbindung des ersten Flächenelements mit dem Zwischenelement ist typischerweise noch keine Stabilisierungsvorrichtung notwendig, weil das Zwischenelement auf dem ersten Flächenelement aufliegt und die Verbindungsstellen sich typischerweise in Schritt iii) an keinen Stellen mit darunterliegenden Ausnehmungen befinden, sodass keine Stabilisierung durch die Stabilisierungsvorrichtung notwendig ist. Sollte es notwendig sein, kann aber auch in diesem Schritt bereits eine Stabilisierungsvorrichtung verwendet werden und das oben beschriebene Verfahren zum Fügen angewendet werden. Typischerweise befinden sich die Verbindungsstellen, insbesondere Schweißstellen, in Schritt iii) an Stellen, an denen das Zwischenelement unmittelbar auf dem ersten Flächenelement aufliegt, ohne dass Ausnehmungen wie Hohlräume darunter oder dazwischen liegen. Eine Formveränderung durch Einsacken von Ausnehmungen findet daher typischerweise in Schritt iii) nicht statt. Das erste Flächenelement muss lediglich von unten, beispielsweise durch den Tisch, gestützt werden. Als Tisch kann jede stabile Unterlage bezeichnet werden. In Schritt v) befindet sich jedoch zumindest eine Verbindungsstelle, insbesondere zumindest eine Schweißstelle, an einer Stelle, an der sich darunter eine Ausnehmung befindet, die zumindest teilweise durch die Verstärkungsstruktur des ersten FKV-Bauteils gebildet ist. Um eine Formveränderung der Ausnehmung und damit des ersten FKV-Bauteils zu verhindern, wird die Stabilisierungsvorrichtung in die Ausnehmung eingeführt und das oben beschriebene Verfahren zum Fügen angewandt.

Nach dem Fügen, insbesondere nach dem Schweißen, des ersten und des zweiten FKV-Bauteils kann die Stabilisierungsvorrichtung aus der Ausnehmung entfernt werden, vorzugsweise nachdem das Fluid zumindest teilweise wieder aus dem Hohlraum abgelassen wurde. Die Stabilisierungsvorrichtung kann erneut verwendet werden.

Die eingangs erwähnte Aufgabe wird auch durch eine Stabilisierungsvorrichtung nach Anspruch 10 gelöst. Die Stabilisierungsvorrichtung kann insbesondere während eines Fügeprozesses, insbesondere während eines Schweißprozesses, zur formerhaltenden und/oder formgebenden Stützung eines Faser-Kunststoff-Verbund-(FKV)-Bauteils in eine Ausnehmung desselben eingeführt werden. Die erfindungsgemäße Stabilisierungsvorrichtung weist dabei auf:
einen vorzugsweise länglichen Grundkörper mit einem Hohlraum, der mit einem Fluid füllbar ist,
eine Öffnung, die vorzugsweise am Grundkörper angeordnet ist, und
ein bewegliches Anpresselement zur Übertragung einer nach außen gerichteten Druckkraft auf das FKV-Bauteil, wobei das Anpresselement zumindest teilweise eine höhere Flexibilität aufweist als der Grundkörper, wobei die Druckkraft durch Füllen des Hohlraums mit dem Fluid erzeugbar ist, wobei das Anpresselement einen Sack aufweist, der innerhalb des Hohlraumes angeordnet ist und der zur Erzeugung der Druckkraft mit dem Fluid füllbar ist, wobei der Sack dazu eingerichtet ist, im gefüllten Zustand zumindest teilweise durch die Öffnung hindurchzuragen, um die Druckkraft auf eine die Ausnehmung begrenzende Begrenzungsfläche des FKV-Bauteils zu erzeugen, dadurch gekennzeichnet, dass das Anpresselement weiters ein Wärmeisolierelement, aufweist, welches an der Außenseite des Grundkörpers angeordnet ist, sodass die Druckkraft über das Wärmeisolierelement auf das anliegende FKV-Bauteil übertragbar ist.

Hinsichtlich der Vorteile und der Ausgestaltung der Merkmale der Stabiliserungsvorrichtung wird auch auf die Ausführungen in Zusammenhang mit dem oben beschriebenen Verfahren verwiesen. Der Hohlraum im Grundkörper ist mit einem Fluid, beispielsweise einem Gas, insbesondere Luft, oder einer Flüssigkeit, insbesondere Wasser oder Öl, füllbar. Wenn, wie weiter oben und unten beschrieben, das Anpresselement einen Sack aufweist, der in dem Hohlraum angeordnet ist, wird dieser mit dem Fluid gefüllt. Vorzugsweise ist der Grundkörper länglich ausgebildet. Das Anpresselement ist gegenüber dem Grundkörper beweglich. Durch das Füllen des Hohlraumes (oder gegebenenfalls des Sackes im Hohlraum) mit dem Fluid wird das Anpresselement im eingeführten Zustand in der Ausnehmung gegen die Begrenzungsfläche an der Innenseite des ersten FKV-Bauteils gedrückt. Die Form des Grundkörpers bleibt dabei im Wesentlichen erhalten. Die Druckkraft des Fluids wird über die Öffnung auf das FKV-Bauteil übertragen. Durch die höhere Flexibilität des Anpresselements ist dieses gegenüber dem Grundkörper auslenkbar. Bevorzugt ist das Anpresselement elastisch verformbar. Die Flexibilität des Anpresselements kann beispielsweise erreicht werden, indem das Anpresselement zumindest teilweise ein Material aufweist, das flexibler, d.h. weniger steif, ist als das Material des Grundkörpers. Es kann auch vorgesehen sein, dass das Anpresselement und der Grundkörper aus dem gleichen Material oder einem ähnlich steifen Material bestehen, das Anpresselement aber ein Gelenk aufweist oder eine dünnere Wandstärke aufweist als der Grundkörper. Eine geometrische Lösung ist auch möglich, indem zum Beispiel lokale Verstärkungen oder Schwächungen im Material vorgesehen sind. Durch eine entsprechend dünne Wandstärke kann auch mit an sich harten und steifen Materialien eine hinreichende Flexibilität des Anpresselements erreicht werden. Ein Beispiel hierfür ist Aluminium: Ein Grundkörper aus Aluminium ermöglicht bei einer dicken Wandstärke, dass der Grundkörper unter dem Druck des Fluids im Wesentlichen nicht verformt wird. Eine dünne Aluminiumplatte als Anpresselement kann jedoch entsprechend verformt werden.

Vorgesehen ist, dass das Anpresselement einen Sack aufweist, der innerhalb des Hohlraumes angeordnet ist und der zur Erzeugung der Druckkraft mit dem Fluid füllbar ist, wobei der Sack dazu eingerichtet ist, im gefüllten Zustand zumindest teilweise durch die Öffnung hindurchzuragen, um die Druckkraft auf das Bauteil zu erzeugen. Die Öffnung kann dabei frei sein, sodass der Sack ungehindert durchtreten kann. Die Öffnung kann alternativ aber auch abgedeckt sein, beispielsweise durch ein Folienelement, ein Gummielement oder eine flexible Wandstruktur. Der Sack kann aus einem Kunststoffmaterial oder einem Gummimaterial bestehen. In einer besonders bevorzugten Ausführungsform kann es sich bei dem Sack um eine Schlauchfolie handeln, die an einem Ende geschlossen ist und am anderen Ende mit einer Fluidversorgung, insbesondere einer Gasversorgung, verbunden ist. Im gefüllten Zustand füllt der Sack im Wesentlichen den gesamten Hohlraum aus und passt sich an dessen Form im Wesentlichen an.

Wenn das Fügen durch Verschweißen der FKV-Bauteile erfolgt, ist es, wie im Zusammenhang mit dem erfindungsgemäßen Verfahren bereits ausgeführt, vorteilhaft, dass das Anpresselement ein Wärmeisolierelement aufweist, welches an der Außenseite des Grundkörpers angeordnet ist, sodass die Druckkraft über das Wärmeisolierelement auf das anliegende Bauteil übertragbar ist. Vorzugsweise ist das Wärmeisolierelement als plane, d.h. ungewölbte, Platte ausgeführt. Das Wärmeisolierelement ist vorzugsweise eine Wärmeisolierplatte.

In einer bevorzugten Ausführungsform besteht das Wärmeisolierelement aus einem Keramikmaterial, einem Polymermaterial, einem FKV-Material, einem Betonmaterial, einem Zementmaterial, Faserbeton oder einer Mischung aus den genannten Materialien.

In einer Ausführungsform der Erfindung besteht der Grundkörper aus einem Polymermaterial, einem FKV-Material, einem Metall oder einer Mischung aus den genannten Materialien.

Für die Stabilisierung von durch Hohlprofile gebildete Ausnehmungen ist es günstig, wenn der Grundkörper im Querschnitt im Wesentlichen U-förmig oder im Wesentlichen C-förmig ist. Die Querschnittsform des Grundkörpers kann einen Längssteg aufweisen, an dessen gegenüberliegenden Längsrändern ein erster Quersteg und ein zweiter Quersteg abstehen. Der erste Quersteg schließt mit dem Längssteg einen ersten Winkel ein. Der zweite Quersteg schließt mit dem Längssteg einen zweiten Winkel ein. Der erste und der zweite Winkel können beispielsweise im Wesentlichen 90° betragen. Der erste und/oder der zweite Winkel kann auch kleiner als 90° sein, sodass sich die Querschnittsform des Grundkörpers zu den freien Enden der Querstege hin verjüngt. Möglich ist auch, dass der erste und/oder der zweite Winkel größer als 90° ist. Die Querstege können auch an den vom Längssteg abgewandten Enden jeweils einander zugewandte Vorsprünge aufweisen. Der eine Quersteg kann höher als der andere Quersteg sein. Vorzugsweise ist die Querschnittsform des Grundkörpers über die gesamte Länge im Wesentlichen gleich. Die Öffnung der Stabilisierungsvorrichtung am Grundkörper kann durch ein offenes Ende des C oder des U gebildet sein. Falls Querstege mit Vorsprüngen vorgesehen sind, kann die Öffnung zwischen den Vorsprüngen ausgebildet sein. Die Vorsprünge können auch so ausgeführt sein, dass sie sich im Querschnitt zur Öffnung hin jeweils verjüngen. Dadurch kann die Druckkraft effektiver auf die Verbindungsstelle übertragen werden, insbesondere, wenn ein Sack vorgesehen ist.

Da sich verstärkende Strukturen in Flugzeugteilen wie Spoiler oftmals zu einer Seite hin verjüngen, ist es günstig, wenn sich auch die Querschnittsform des Grundkörpers zur Öffnung hin verjüngt. Wenn der Querschnitt im Wesentlichen C- oder U-förmig ist und die Öffnung durch das offene Ende des C oder U gebildet ist, verjüngt sich die Querschnittsform des Grundkörpers zum offenen Ende des C oder U hin.

Die Stabilisierungsvorrichtung kann einen Bestandteil eines Werkzeugs zum Fügen von Faser-Kunststoff-Verbund-(FKV)-Bauteilen bilden. Ein solches Werkzeug kann aufweisen:
- einen Tisch, vorzugsweise mit einer Haltevorrichtung zum Fixieren eines FKV-Bauteils;
- eine Fügevorrichtung, insbesondere eine Schweißvorrichtung;
- eine Stabilisierungsvorrichtung in einer der oben beschriebenen Ausführungsvarianten.

Mit der Fügevorrichtung können FKV-Materialien miteinander verbunden, insbesondere verschweißt, werden. Insbesondere kann die Schweißvorrichtung als Induktionsschweißvorrichtung ausgebildet sein. Alternativ kann die Schweißvorrichtung beispielsweise eine Ultraschallschweißvorrichtung, eine Widerstandsschweißvorrichtung, eine Konduktionsschweißvorrichtung oder eine Laserschweißvorrichtung sein. Die Fügevorrichtung kann an einem Roboter, insbesondere an einem Roboterarm, angeordnet sein.

Diese Offenbarung bezieht sich auch auf die Kombination aus dem Werkzeug wie oben beschrieben mit dem ersten und dem zweiten FKV-Bauteil wie oben beschrieben.

Im Folgenden wird die Erfindung an Hand von Figuren näher erläutert, auf die sie jedoch nicht beschränkt sein soll.

Es zeigen:
Fig. 1 eine erfindungsgemäße Stabilisierungsvorrichtung, die teilweise in eine Ausnehmung eines ersten FKV-Bauteils eingeführt ist;
Fig. 2 eine erfindungsgemäße Stabilisierungsvorrichtung in einer Ausnehmung eines ersten FKV-Bauteils im Querschnitt;
Fig. 3 einen Grundkörper einer erfindungsgemäßen Stabilisierungsvorrichtung;
Fig. 4 eine erfindungsgemäße Stabilisierungsvorrichtung mit einem Wärmeisolierelement;
Fig. 5 einen Ablauf des erfindungsgemäßen Verfahrens zum Fügen von zwei FKV-Bauteilen;
Fig. 6 einen Ablauf des erfindungsgemäßen Verfahrens zur Herstellung eines Flugzeugteils; und
Fig. 7 einen Ausschnitt eines Flugzeugteils bei der Herstellung.

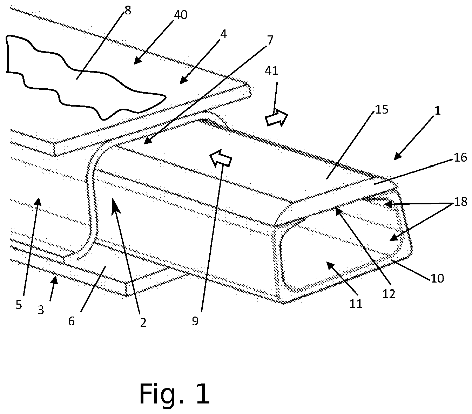

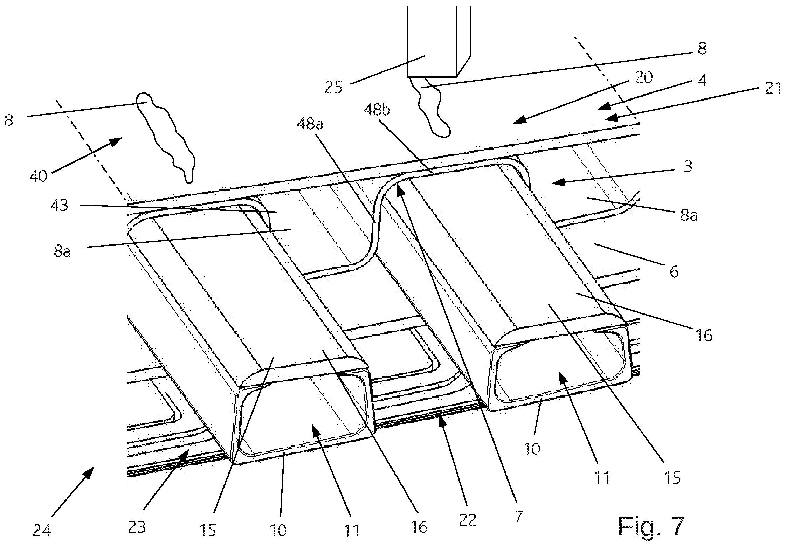

Fig. 1 zeigt eine erfindungsgemäße Stabilisierungsvorrichtung 1, die zur Veranschaulichung nur teilweise in eine Ausnehmung 2 eines ersten FKV-Bauteils 3 (FKV: Faser-Kunststoff-Verbund) eingeführt ist. Ein zweites FKV-Bauteil 4 ist an das erste FKV-Bauteil 3 angefügt, aber noch nicht mit diesem verbunden. Selbstverständlich können das erste 3 und das zweite FKV-Bauteil 4 auch größere Bauteile mit mehreren Ausnehmungen 2 darstellen, beispielsweise Bauteile für Flugzeugteile 20 wie etwa Steuerflächenelemente. Ein Beispiel für ein Steuerflächenelement ist ein Spoiler 21 (siehe Fig. 7).

Das erste FKV-Bauteil 3 besitzt in der gezeigten Darstellung eine Verstärkungsstruktur 5 mit einem Hohlprofil 7 in Form eines umgedrehten U, die mit einem ersten Flächenelement 6 verbunden ist. Die Ausnehmung 2 wird durch das Hohlprofil 7 gebildet. In Fig. 1 ist nur eine einzige Ausnehmung 2 dargestellt; ein FKV-Bauteil kann jedoch selbstverständlich mehrere Ausnehmungen 2 und damit eine größere Ausdehnung aufweisen als in Fig. 1 dargestellt (siehe zum Beispiel Fig. 7). Beispielsweise kann die Verstärkungsstruktur 5 ein Strukturmuster aufweisen, das in Richtung des Pfeils 41 gleichartig fortgesetzt ist, sodass mehrere gleichartige Hohlprofile 7 mit Ausnehmungen 2 vorliegen. Das zweite FKV-Bauteil 4 ist in der gezeigten Darstellung durch ein zweites Flächenelement 40 gebildet.

In Fig. 1 ist das zweite FKV-Bauteil 4 an das erste FKV-Bauteil 3 angefügt. Das zweite FKV-Bauteil 4 soll mit dem ersten FKV-Bauteil 3 an einer Verbindungsstelle 8 durch Fügen verbunden werden. Bei den im Folgenden beschriebenen Ausführungsformen der Erfindung erfolgt das Fügen durch Verschweißen, beispielsweise Induktionsschweißen oder Ultraschallschweißen. Die Verbindungsstelle 8 kann daher auch als Schweißstelle 8 bezeichnet werden. Das Fügen kann prinzipiell aber auch durch Verschrauben, Kleben oder Vernieten erfolgen. Die Schweißstelle 8 ist durch die gestrichelte Linie angedeutet und befindet sich an der Außenseite der Ausnehmung 2 an der Verbindungsstelle des ersten FKV-Bauteils 3 mit dem zweiten FKV-Bauteil 4. Die Schweißstelle 8 ist länglich ausgebildet und in etwa parallel zur Ausnehmung 2 orientiert.

Um zu verhindern, dass während des Verschweißens durch die eingebrachte Wärme und den aufgewendeten Druck das Hohlprofil 7 und damit auch die Ausnehmung 2 verformt wird, wird erfindungsgemäß vor dem Verschweißen die Stabilisierungsvorrichtung 1 in die Ausnehmung 2 in Pfeilrichtung 9 eingeführt, und zwar vorzugsweise im Wesentlichen vollständig. Die Stabilisierungsvorrichtung 1 weist in der gezeigten Ausführungsform einen länglichen Grundkörper 10 insbesondere aus Metall auf, der im Inneren einen Hohlraum 11 einschließt. In der gezeigten Ausführungsform besitzt die Stabilisierungsvorrichtung 1 im Wesentlichen die gleiche Querschnittsform wie die Ausnehmung 2. Die Größe der Stabilisierungsvorrichtung 1 ist an die Größe der Ausnehmung 2 angepasst.

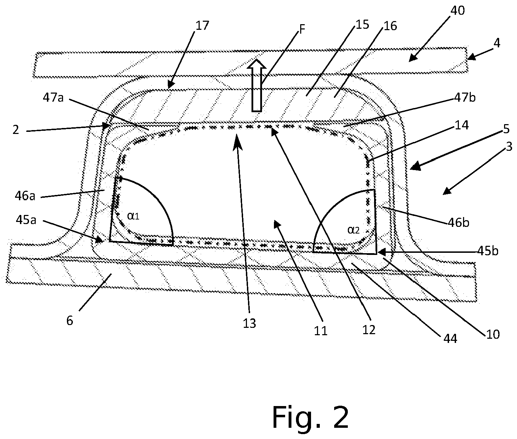

Fig. 2 zeigt die Stabilisierungsvorrichtung 1 in der Ausnehmung 2 im Querschnitt. Wie in Fig. 2 ersichtlich, besitzt der Grundkörper 10 eine im Wesentlichen C-förmige Querschnittsform, die sich nach oben hin verjüngt. Die Querschnittsform des Grundkörpers 10 besitzt in der gezeigten Ausführungsform einen Längssteg 44, an dessen gegenüberliegenden Längsrändern 45a, b ein erster Quersteg 46a und ein zweiter Quersteg 46b abstehen. Der erste Quersteg 46a schließt mit dem Längssteg 44 einen ersten Winkel α₁ ein. Der zweite Quersteg 46b schließt mit dem Längssteg 44 einen zweiten Winkel α₂ ein. Die Winkel α_{1,2} können beispielsweise 90° betragen. Zumindest einer der Winkel α_{1,2} (auch beide) kann auch kleiner als 90° sein, sodass sich die Querschnittsform des Grundkörpers 10, wie in der gezeigten Ausführungsform, nach oben hin verjüngt. Möglich ist auch, dass zumindest einer der Winkel α_{1,2} (auch beide) größer als 90° ist. Die Querstege 46a, b können, wie gezeigt, auch an den vom Längssteg abgewandten Enden jeweils einander zugewandte Vorsprünge 47a, b aufweisen. Der eine Quersteg 46 des C-Profils der Stabilisierungsvorrichtung 1 kann höher als der andere Quersteg 46 des C-Profils ausgeführt sein. Vorzugsweise ist die Querschnittsform des Grundkörpers 10 über die gesamte Länge im Wesentlichen gleich. An der Oberseite des Grundkörpers 10 weist die Stabilisierungsvorrichtung 1 zudem eine Öffnung 12 zwischen den Querstegen 46, insbesondere zwischen deren Vorsprünge 47a, b, auf, die den Hohlraum 11 mit der Umgebung verbindet. Die Vorsprünge 47a, b können sich zur Öffnung 12 hin verjüngen. Dadurch kann der noch näher zu beschreibende Sack 14 leichter durch die Öffnung 12 treten. Die Stabilisierungsvorrichtung 1 weist des Weiteren ein Anpresselement 13 auf. Das Anpresselement 13 besteht in der gezeigten Ausführungsform zumindest teilweise aus einem Material, das eine höhere Flexibilität, d.h. eine geringere Steifigkeit, als das Material des Grundkörpers 10 aufweist. In der gezeigten Ausführungsform weist das Anpresselement 13 einen Sack 14 auf, der sich im Inneren des Hohlraums 11 befindet und der aus einem Kunststoffmaterial besteht. Weiters besitzt das Anpresselement 13 ein Wärmeisolierelement 15 aus Keramik in Form einer Wärmeisolierplatte 16, die an der Außenseite des Grundkörpers 10 über der Öffnung 12 angeordnet ist und an den Vorsprüngen 47a, b anliegen kann. Das Wärmeisolierelement 15 schützt den Sack 14 vor hohem Wärmeeintrag und sorgt auch dafür, dass während des Verschweißens die Wärme nicht von der Schweißstelle 8 an andere Stellen übertragen wird, sodass die Wärme zum Verschweißen nicht verloren geht. Durch Füllen des Sackes 14 mit einem Fluid, vorzugsweise einem Gas, insbesondere Luft, dehnt sich der Sack 14 im Hohlraum 11 aus und übt über das Wärmeisolierelement 15 eine Druckkraft F auf eine die Ausnehmung 2 begrenzende Begrenzungsfläche 17 an der Innenseite des ersten FKV-Bauteils 3 aus. Aufgrund der höheren Steifigkeit und damit geringeren Flexibilität des Grundkörpers 10 im Vergleich zu dem Sack 14 bleibt die Form des Grundkörpers 10 im Wesentlichen gleich, wenn das Anpresselement 13 die Druckkraft F auf die Begrenzungsfläche 17 ausübt. Im gefüllten Zustand ragt der Sack 14 dabei zumindest teilweise durch die Öffnung 12. Die Druckkraft F wird somit über die Öffnung 12 übertragen. Dadurch wird die Druckkraft F auf die Schweißstelle 8 und deren unmittelbare Umgebung gelenkt, während der Grundkörper 10 sich kaum verformt und keine oder nur eine geringe Drucckraft auf die Begrenzungsfläche 17 ausübt. Um die Druckkraft F zu erzeugen, wird das Fluid unter einen Druck gesetzt, der zwischen 1,0 und 8,0 Bar beträgt. Bei einem zu hohen Druck (beispielsweise 15 Bar) bestünde das Risiko, dass die Ausnehmung durch die Stabilisierungsvorrichtung 1 verformt würde. Wäre der Druck zu niedrig (beispielsweise unter 1 Bar), wäre die Drucckraft F zu niedrig und die Ausnehmung 2 könnte beim Verschweißen verformt werden. Die Öffnung 12 kann zusätzlich noch mit einem Folienelement, einem Gummielement oder einem flexiblen Wandelement (nicht gezeigt) abgedeckt sein.

Wenn das Anpresselement 13 eine Druckkraft F auf die Begrenzungsfläche 17 der Ausnehmung 2 ausübt, kann mit dem Schweißprozess begonnen werden, um das erste FKV-Bauteil 3 mit dem zweiten FKV-Bauteil 4 zu verbinden. Durch die Druckkraft F wird verhindert, dass sich die Ausnehmung 2 bzw. das Hohlprofil 7 während des Verschweißens, beispielsweise durch Zusammensacken, verformt. Die Stabilisierungsvorrichtung 1 stellt also einen Gegendruck zur Verfügung, der dem ausgeübten Druck während des Schweißens entgegenwirkt, sodass das Hohlprofil 7 nicht zusammensacken kann.

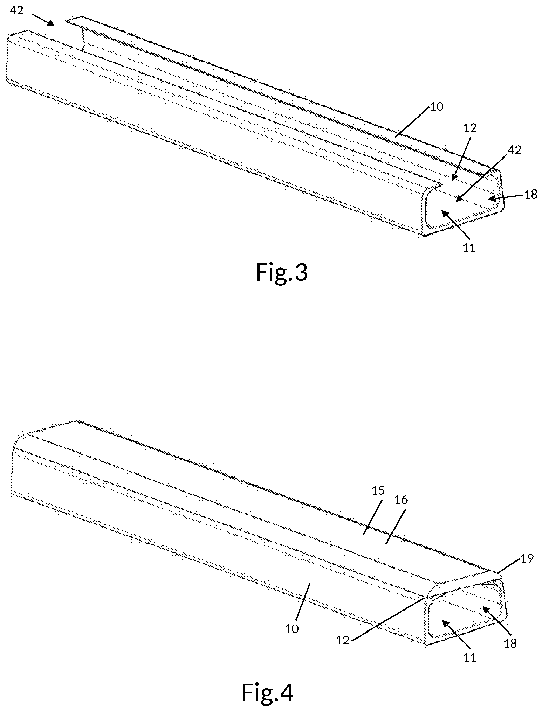

Fig. 3 zeigt eine Schrägansicht auf den länglichen Grundkörper 10 der Stabilisierungsvorrichtung. Es ist erkennbar, dass der Querschnitt des Grundkörpers 10 im Wesentlichen C-förmig ist und sich in Richtung zur Öffnung 12 hin verjüngt. Die Ecken 18 der Innenfläche des Grundkörpers 10 sind abgerundet, um Beschädigungen des Sackes 14 in dessen gefüllten Zustand zu vermeiden. Der Grundkörper 10 kann weiters an zumindest einer der beiden Stirnseiten eine Einführöffnung 42 aufweisen. Durch eine dieser Einführöffnungen 42 kann der Sack 14 in den Hohlraum 11 eingeführt und mit Fluid versorgt werden.

Fig. 4 zeigt den Grundkörper 10 der Stabilisierungsvorrichtung 1 gemeinsam mit dem Wärmeisolierelement 15. Es ist erkennbar, dass das Wärmeisolierelement 15 ebenfalls eine längliche Form aufweist und im Querschnitt im Wesentlichen trapezförmig ist, wobei die Schenkel 19 des Trapezes eine gewölbte oder abgerundete Form aufweisen.

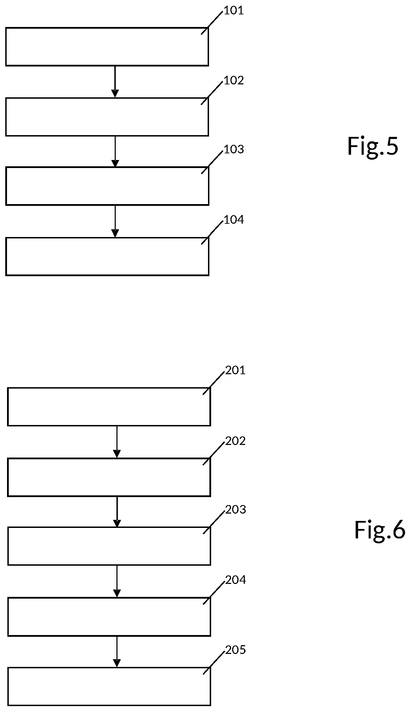

Fig. 5 stellt den Ablauf des erfindungsgemäßen Verfahrens zum Fügen, insbesondere Verschweißen, von FKV-Bauteilen 3, 4 dar. In Schritt 101 werden der erste 3 und der zweite FKV-Bauteil 4 bereitgestellt. In Schritt 102 wird die Stabilisierungsvorrichtung 1 in eine Ausnehmung 2 des ersten FKV-Bauteils 3 eingefügt. In Schritt 103 wird der Hohlraum 11 bzw. der Sack 14 in dem Hohlraum mit dem Fluid gefüllt, sodass das Anpresselement 13 eine Druckkraft F auf die Verbindungsstelle 8 ausübt. In Schritt 104 wird das erste FKV-Bauteil 3 mit dem zweiten FKV-Bauteil 4 verbunden, insbesondere verschweißt. Anschließend kann die Stabilisierungsvorrichtung aus der Ausnehmung entfernt werden, vorzugsweise, nachdem das Fluid wieder zumindest teilweise aus dem Hohlraum 11 abgelassen wurde. Die Stabilisierungsvorrichtung ist wiederverwendbar.

Das Verfahren kann auch bei einem Verfahren zur Herstellung eines Flugzeugteils 20, beispielsweise eines Steuerflächenelements wie etwa ein Spoiler 21, verwendet werden (vgl. auch Fig. 7). In Fig. 6 sind hierzu die einzelnen Schritte dargestellt. In Schritt 201 wird ein erstes Flächenelement 6 auf einem Tisch 22 angeordnet. Der Tisch 22 kann eine Haltevorrichtung 23 zum Fixieren von FKV-Bauteilen 3, 4 aufweisen. In Schritt 202 wird ein Zwischenelement 43 mit einer Verstärkungsstruktur 5 auf das erste Flächenelement 6 aufgelegt und mit diesem anschließend in Schritt 203 an einer Verbindungsstelle 8a, vorzugsweise einer Schweißstelle 8a, durch Fügen verbunden, insbesondere verschweißt. Dadurch wird ein erstes FKV-Bauteil 3 erhalten. In einem Schritt 204 wird ein zweites Flächenelement 40, das einen zweiten FKV-Bauteil 4 bildet, auf das erste FKV-Bauteil 3 gelegt. Anschließend wird in Schritt 205 das zweite FKV-Bauteil 4 mit dem ersten FKV-Bauteil 3 an der Stelle 8 durch Fügen verbunden, wobei das Verfahren nach Fig. 5 angewendet wird.

Fig. 7 zeigt einen Ausschnitt eines Flugzeugteils 20 in Form eines Spoilers 21 bei der Herstellung. Hierbei sind zwei Stabilisierungsvorrichtungen 1 zumindest teilweise in Ausnehmungen 2 eines ersten FKV-Bauteils 3 eingeführt. Das erste FKV-Bauteil 3 weist eine Verstärkungsstruktur 5 als Zwischenelement 43 und ein erstes Flächenelement 6 auf. Die Verstärkungsstruktur 5 bildet Hohlprofile 7 aus. Bei der dargestellten Verstärkungsstruktur 5 sind jeweils zwei im Wesentlichen vertikale Verbindungsstege 48a über einen im Wesentlichen horizontalen Verbindungssteg 48b verbunden. Dieses Strukturmuster setzt sich fort und bildet die Verstärkungsstruktur 5. Ein zweites FKV-Bauteil 4 in Form eines zweiten Flächenelements 40 ist auf das erste FKV-Bauteil 3 aufgelegt und soll mit diesem durch Verschweißen an den Schweißstellen 8 verbunden werden. Die Stabilisierungsvorrichtungen 1 stabilisieren die Ausnehmungen 2 während des Verschweißens wie oben ausgeführt. Der Spoiler 21 wird mittels eines Werkzeugs 24 hergestellt. Das Werkzeug 24 umfasst einen Tisch 22, vorzugsweise mit einer Haltevorrichtung 23, zumindest eine Stabilisierungsvorrichtung 1 und eine Fügevorrichtung 25, vorzugsweise eine Schweißvorrichtung. Diese kann beispielsweise an einem Endeffektor eines Roboters angebracht sein (nicht gezeigt).

## Patentansprüche

1. Verfahren zum Fügen von Faser-Kunststoff-Verbund-(FKV)-Bauteilen (3, 4), insbesondere Flugzeug-FKV-Bauteilen, mit den folgenden Schritten:
i) Bereitstellen eines ersten (3) und eines zweiten FKV-Bauteils (4), wobei das erste FKV-Bauteil (3) eine Ausnehmung (2) aufweist;
ii) Einführen einer Stabilisierungsvorrichtung (1) in die Ausnehmung (2) des ersten FKV-Bauteils (3), wobei die Stabilisierungsvorrichtung (1) einen vorzugsweise länglichen Grundkörper (10) mit einem Hohlraum (11), eine Öffnung (12) und ein Anpresselement (13) aufweist, welches Anpresselement (13) zumindest teilweise eine höhere Flexibilität aufweist als der Grundkörper (10), wobei das Anpresselement (13) einen Sack (14) aufweist, der innerhalb des Hohlraumes (11) angeordnet ist und der zur Erzeugung einer nach außen gerichteten Druckkraft (F) mit einem Fluid füllbar ist, wobei der Sack (14) im gefüllten Zustand dazu eingerichtet ist, zumindest teilweise durch die Öffnung (12) hindurchzuragen, um die Druckkraft (F) auf eine die Ausnehmung (2) begrenzende Begrenzungsfläche (17) des ersten FKV-Bauteils (3) zu erzeugen, wobei das Anpresselement (13) weiters ein Wärmeisolierelement (15) aufweist, welches an der Außenseite des Grundkörpers (10) angeordnet ist, sodass die Drucckraft (F) über das Wärmeisolierelement (15) auf das erste FKV-Bauteil (3) übertragbar ist;
iii) Füllen des Hohlraums (11) mit dem Fluid, sodass das Anpresselement (13) gegen die die Ausnehmung (2) begrenzende Begrenzungsfläche (17) des ersten FKV-Bauteils (3) gedrückt wird;
iv) Verbinden des ersten FKV-Bauteils (3) mit dem zweiten FKV-Bauteil (4) an einer Verbindungsstelle (8) durch Fügen, insbesondere durch Verschweißen, wobei mit dem Anpresselement (13) zur Stabilisierung der Form der Ausnehmung (2) der nach außen gerichtete Druckkraft (F) auf die Verbindungsstelle (8) ausgeübt wird.

2. Verfahren nach Anspruch 1, wobei der Sack (14) zur Erzeugung der Druckkraft (F) mit dem Fluid gefüllt wird, wobei der Sack (14) im gefüllten Zustand zumindest teilweise durch die Öffnung (12) tritt und die Druckkraft (F) auf die Verbindungsstelle (8) erzeugt.

3. Verfahren nach Anspruch 1 oder 2, wobei als Fluid ein Gas, insbesondere Luft, verwendet wird.

4. Verfahren nach einem der Ansprüche 1 bis 3, wobei das Fluid zur Erzeugung der Druckkraft (F) unter Druck gesetzt wird und der Druck zwischen 1,0 Bar und 8,0 Bar, vorzugsweise zwischen 1,5 Bar und 5,0 Bar, insbesondere zwischen 2,0 Bar und 3,0 Bar beträgt.

5. Verfahren nach einem der Ansprüche 1 bis 4, wobei das Wärmeisolierelement (15), insbesondere eine Wärmeisolierplatte (16), während des Fügens gegen die Begrenzungsfläche (17) des ersten FKV-Bauteils (3) gedrückt wird.

6. Verfahren nach einem der Ansprüche 1 bis 5, wobei das erste FKV-Bauteil (3) eine Verstärkungsstruktur (5) aufweist und die Ausnehmung (2) zumindest teilweise durch einen Abschnitt der Verstärkungsstruktur (5) gebildet ist.

7. Verfahren nach einem der Ansprüche 1 bis 6, wobei zumindest das erste FKV-Bauteil (3) während des Fügens fixiert wird.

8. Verfahren nach einem der Ansprüche 1 bis 7, wobei die Verbindungsstelle (8) vor dem Fügen, während des Fügens und/oder nach dem Fügen durch das Fluid gekühlt oder erwärmt wird, vorzugsweise wobei das Fluid zirkuliert wird.

9. Verfahren zur Herstellung eines Flugzeugteils (20), beispielsweise eines Steuerflächenelements, insbesondere eines Spoilers (21), mit den Schritten:
i) Anordnen eines ersten Flächenelements (6) aus FKV-Material auf einem Tisch (22);
ii) Auflegen eines Zwischenelements (43) mit einer Verstärkungsstruktur (5) aus FKV-Material auf das erste Flächenelement (6) ;
iii) Verbinden des Zwischenelements (43) mit dem ersten Flächenelement (6) durch Fügen, insbesondere Verschweißen, an zumindest einer Verbindungsstelle (8a), um einen ersten FKV-Bauteil (3) zu erhalten;
iv) Auflegen eines zweiten FKV-Bauteils (4) in Form eines zweiten Flächenelements (40) auf das erste FKV-Bauteil (3);
v) Verbinden des ersten FKV-Bauteils (3) mit dem zweiten FKV-Bauteil (4) durch Anwenden des Verfahrens nach einem der Ansprüche 1 bis 8.

10. Stabilisierungsvorrichtung (1), die, insbesondere während eines Fügeprozesses, zur formerhaltenden und/oder formgebenden Stützung eines Faser-Kunststoff-Verbund-(FKV)-Bauteils (3) in eine Ausnehmung (2) desselben einführbar ist, aufweisend:
einen vorzugsweise länglichen Grundkörper (10) mit einem Hohlraum (11), der mit einem Fluid füllbar ist,
eine Öffnung (12), die vorzugsweise am Grundkörper (10) angeordnet ist, und
ein bewegliches Anpresselement (13) zur Übertragung einer nach außen gerichteten Druckkraft (F) auf das FKV-Bauteil (3), wobei das Anpresselement (13) zumindest teilweise eine höhere Flexibilität aufweist als der Grundkörper (10), wobei die Druckkraft (F) durch Füllen des Hohlraums (11) mit dem Fluid erzeugbar ist, wobei das Anpresselement (13) einen Sack (14) aufweist, der innerhalb des Hohlraumes (11) angeordnet ist und der zur Erzeugung der Druckkraft (F) mit dem Fluid füllbar ist, wobei der Sack (14) dazu eingerichtet ist, im gefüllten Zustand zumindest teilweise durch die Öffnung (12) hindurchzuragen, um die Druckkraft (F) auf eine die Ausnehmung (2) begrenzende Begrenzungsfläche (17) des FKV-Bauteils (3) zu erzeugen, **dadurch gekennzeichnet, dass** das Anpresselement (13) weiters ein Wärmeisolierelement (15), aufweist, welches an der Außenseite des Grundkörpers (10) angeordnet ist, sodass die Druckkraft (F) über das Wärmeisolierelement (15) auf das anliegende FKV-Bauteil (3) übertragbar ist.

11. Stabilisierungsvorrichtung (1) nach Anspruch 10, **dadurch gekennzeichnet, dass** das Wärmeisolierelement (15) eine Wärmeisolierplatte (16) ist und das Wärmeisolierelement (15) vorzugsweise aus einem Keramikmaterial, einem Polymermaterial, einem FKV-Material, einem Betonmaterial, einem Zementmaterial, Faserbeton oder einer Mischung aus den genannten Materialien besteht.

12. Stabilisierungsvorrichtung (1) nach Anspruch 10 oder 11, **dadurch gekennzeichnet, dass** der Grundkörper (10) aus einem Polymermaterial, einem FKV-Material, einem Metall oder einer Mischung aus den genannten Materialien besteht.

13. Stabilisierungsvorrichtung (1) nach einem der Ansprüche 10 bis 12, **dadurch gekennzeichnet, dass** der Grundkörper (10) im Querschnitt im Wesentlichen U-förmig oder im Wesentlichen C-förmig ist.

14. Stabilisierungsvorrichtung (1) nach einem der Ansprüche 10 bis 13, **dadurch gekennzeichnet, dass** sich die Querschnittsform des Grundkörpers (10) zur Öffnung (12) hin verjüngt.

15. Werkzeug (24) zum Fügen von Faser-Kunststoff-Verbund-(FKV)-Bauteilen (3, 4), aufweisend:
- einen Tisch (22), vorzugsweise mit einer Haltevorrichtung zum Fixieren eines FKV-Bauteils (3, 4);
- eine Fügevorrichtung (25), insbesondere eine Schweißvorrichtung;
- eine Stabilisierungsvorrichtung (1) nach einem der Ansprüche 10 bis 14.

## Claims

1. A method for joining fibre-reinforced plastic (FRP) components (3, 4), in particular aircraft FRP components, comprising the following steps:
i) Providing a first (3) and a second (4) FRP component, the first FRP component (3) having a recess (2);
ii) Inserting a stabilising device (1) into the recess (2) of the first FRP component (3), wherein the stabilising device (1) has a preferably elongated base body (10) with a cavity (11), an opening (12) and a pressing element (13), which pressing element (13) has, at least partially, a higher flexibility than the base body(10), wherein the pressing element (13) comprises a bag (14), which is arranged inside the cavity (11) and which can be filled with a fluid to generate an outwardly directed pressure force (F), wherein the bag (14), when in filled state, is arranged, to at least partially protrude through the opening (12), in order to generate the pressure force (F) onto a delimiting surface (17) of the first FRP component (3), which is delimiting the recess (2), wherein the pressing element (13) further comprises a heat-insulating element (15), which is arranged on the outside of the base body (10), so that the pressure force (F) can be transmitted via the heat-insulating element (15) to the first FRP component (3);
iii) Filling the cavity (11) with a fluid such that the pressing element (13) is pressed against a delimiting surface (17) of the first FRP component (3), which delimits the recess (2) ;
iv) Connecting the first FRP component (3) to the second FRP component (4) by joining at a connecting point (8), in particular by welding, wherein the pressure force (F), which is directed towards the outside, is exerted onto the connecting point (8) by means of the pressing element (13) for stabilising the shape of the recess (2).

2. The method according to claim 1, wherein the bag (14) is filled with the fluid in order to generate the pressure force (F), wherein the bag (14) passes at least partially through the opening (12) in the filled state and generates the pressure force (F) on the connecting point (8).

3. The method according to claim 1 or 2, wherein a gas, in particular air, is used as fluid.

4. The method according to any one of claims 1 to 3, wherein the fluid for generating the pressure force (F) is pressurised and the pressure is between 1.0 bar and 8.0 bar, preferably between 1.5 bar and 5.0 bar, in particular between 2.0 bar and 3.0 bar.

5. The method according to any one of claims 1 to 4, wherein the pressing element (13) has a heat-insulating element (15), in particular a heat-insulating plate (16), which is pressed against the delimiting surface (17) of the first FRP component (3) during the joining.

6. The method according to any one of claims 1 to 5, wherein the first FRP component (3) has a reinforcing structure (5) and the recess (2) is formed at least partially by a section of the reinforcing structure (5).

7. The method according to any one of claims 1 to 6, wherein at least the first FRP component (3) is fixed during the joining.

8. The method according to any one of claims 1 to 7, wherein the connecting point (8) is cooled or heated by the fluid before joining, during joining, and/or after joining, preferably wherein the fluid is circulated.

9. A method for producing an aircraft part (20), for example a control surface element, in particular a spoiler (21), comprising the steps of:
i) Arranging a first surface element (6) of FRP material on a table (22);
ii) Placing an intermediate element (43) having a reinforcing structure (5) of FRP material on the first surface element (6);
iii) Connecting the intermediate element (43) to the first surface element (6) by joining, in particular welding, at at least one connecting point (8a), in order to obtain a first FRP component (3);
iv) Placing a second FRP component (4) in the form of a second surface element (40) on the first FRP component (3);
v) Connecting the first FRP component (3) to the second FRP component (4) by applying the method according to any one of claims 1 to 8.

10. A stabilising device (1) which can be inserted in particular during a joining process for the shape-retaining and/or shaping support of a fibre-reinforced plastic (FRP) component (3) into a recess (2) thereof, comprising:
a preferably elongated base body (10) with an internal cavity (11), which can be filled with a fluid,
an opening (12), which is preferably arranged on the base body (10), and
a movable pressing element (13) for transmitting a pressure force (F), which is directed towards the outside, to the FRP component (3), wherein the pressing element (13) has at least partially a higher flexibility than the base body (10), wherein the pressure force (F) can be generated by filling the cavity (11) with the fluid, wherein the pressing element (13) comprises a bag (14), which is arranged inside the cavity (11) and which can be filled with a fluid to generate a pressure force (F), wherein the bag (14), when in filled state, is arranged, to at least partially protrude through the opening (12), in order to generate the pressure force (F) onto a delimiting surface (17) of the FRP component (3), which is delimiting the recess (2), **characterised in that**, the pressing element (13) further comprises a heat-insulating element (15), which is arranged on the outside of the base body (10), so that the pressure force (F) can be transmitted via the heat-insulating element (15) to the first FRP component (3).

11. The stabilising device (1) according to claim 10, wherein the heat-insulating element (15) is a heat-insulating plate (16) and the heat-insulating element (15) consists preferably of a ceramic material, a polymer material, an FRP material, a concrete material, a cement material, fibre-reinforced concrete or a mixture of said materials.

12. The stabilising device (1) according to claim 10 or 11, wherein the base body (10) is made of a polymer material, an FRP material, a metal or a mixture of said materials.

13. The stabilising device (1) according to any one of claims 10 to 12, wherein the base body (10) is substantially U-shaped or substantially C-shaped in cross section.

14. The stabilising device (1) according to any one of claims 10 to 13, wherein the cross-sectional shape of the base body (10) tapers toward the opening (12).

15. A tool (24) for joining fibre-reinforced plastic (FRP) components (3, 4), comprising:
- a table (22), preferably having a holding device for fixing an FRP component (3, 4);
- a joining device (25), in particular a welding device;
- a stabilising device (1) according to any one of claims 10 to 14.

## Revendications

1. Procédé d'assemblage de composants (3, 4) en composite fibres-matière plastique (CFP), en particulier de composants CFP d'aéronef, comprenant les étapes suivantes :
i) Fournir un premier (3) et un deuxième composants CFP (4), le premier composant CFP (3) présentant un évidement (2) ;
ii) Insérer un dispositif de stabilisation (1) dans l'évidement (2) du premier composant CFP (3), le dispositif de stabilisation (1) présentant un châssis (10) de préférence allongé avec une cavité (11), une ouverture (12) et un élément de pression (13), lequel élément de pression (13) présentant au moins partiellement une flexibilité supérieure à celle du châssis (10), l'élément de pression (13) comportant un sac (14) qui est agencé à l'intérieur de la cavité (11) et qui peut être rempli d'un fluide pour générer une force de pression (F) vers l'extérieur, le sac (14) à l'état rempli étant conçu pour dépasser au moins partiellement à travers l'ouverture (12) afin d'appliquer la force de pression (F) sur une surface de délimitation (17) délimitant l'évidement (2) du premier composant CFP (3), l'élément de pression (13) présentant en outre un élément d'isolation thermique (15) qui est agencé à l'extérieur du châssis (10), de sorte que la force de pression (F) puisse être transférée au premier composant CFP (3) via l'élément d'isolation thermique (15) ;
iii) Remplir la cavité (11) de fluide, de sorte que l'élément de pression (13) soit pressé contre la surface de délimitation (17) du premier composant CFP (3) délimitant l'évidement (2) ;
iv) Relier le premier composant CFP (3) au deuxième composant CFP (4) au niveau d'un point de liaison (8) par assemblage, notamment par soudage, la force de pression (F) dirigée vers l'extérieur étant exercée sur le point de liaison (8) avec l'élément de pression (13) pour stabiliser la forme de l'évidement (2).

2. Procédé selon la revendication 1, dans lequel le sac (14) se remplit de fluide pour générer la force de pression (F), le sac (14) à l'état rempli dépassant au moins partiellement à travers l'ouverture (12) et générant la force de pression (F) sur le point de liaison (8).

3. Procédé selon la revendication 1 ou 2, dans lequel un gaz, en particulier de l'air, est utilisé comme fluide.

4. Procédé selon l'une des revendications 1 à 3, dans lequel le fluide est mis sous pression pour générer la force de pression (F) et la pression est comprise entre 1,0 bar et 8,0 bar, de préférence entre 1,5 bar et 5,0 bar, en particulier entre 2,0 bar et 3,0 bar.

5. Procédé selon l'une des revendications 1 à 4, dans lequel l'élément d'isolation thermique (15), en particulier une plaque d'isolation thermique (16), est pressé contre la surface de délimitation (17) du premier composant CFP (3) lors de l'assemblage.

6. Procédé selon l'une des revendications 1 à 5, dans lequel le premier composant CFP (3) présente une structure de renforcement (5) et l'évidement (2) est au moins partiellement formé par une section de la structure de renforcement (5).

7. Procédé selon l'une des revendications 1 à 6, dans lequel au moins le premier composant CFP (3) est fixé lors de l'assemblage.

8. Procédé selon l'une des revendications 1 à 7, dans lequel le point de liaison (8) est refroidi ou chauffé par le fluide avant l'assemblage, pendant l'assemblage et/ou après l'assemblage, de préférence avec circulation du fluide.

9. Procédé de réalisation d'une pièce (20) d'aéronef, par exemple d'un élément de surface de commande, en particulier un spoiler (21), avec les étapes suivantes :
i) Disposer un premier élément de surface (6) constitué d'un matériau CFP sur une table (22) ;
ii) Placer un élément intermédiaire (43) avec une structure de renforcement (5) en matériau CFP sur le premier élément de surface (6) ;
iii) Relier l'élément intermédiaire (43) au premier élément de surface (6) par assemblage, en particulier par soudage, via au moins un point de liaison (8a) pour obtenir un premier composant CFP (3) ;
iv) Placer un deuxième composant CFP (4) sous la forme d'un deuxième élément de surface (40) sur le premier composant CFP (3) ;
v) Relier le premier composant CFP (3) au deuxième composant CFP (4) en utilisant le procédé selon l'une des revendications 1 à 8.

10. Dispositif de stabilisation (1) qui peut être inséré dans un évidement (2) de celui-ci, en particulier lors d'un processus d'assemblage, pour le maintien de la forme et/ou la mise en forme d'un composant en composite fibres-matière plastique (3), comprenant :
un châssis (10) de préférence allongé avec une cavité (11) qui peut être remplie d'un fluide,
une ouverture (12), qui est de préférence agencée sur le châssis (10), et
un élément de pression mobile (13) pour transmettre une force de pression (F) dirigée vers l'extérieur sur le composant CFP (3), l'élément de pression (13) ayant au moins partiellement une flexibilité plus élevée que le châssis (10), la force de pression (F) pouvant être générée en remplissant la cavité (11) avec le fluide, l'élément de pression (13) comportant un sac (14) qui est agencé à l'intérieur de la cavité (11) et qui peut être rempli avec le fluide pour générer la force de pression (F), le sac (14) étant conçu pour dépasser au moins partiellement à travers l'ouverture (12) à l'état rempli afin de générer la force de pression (F) sur une surface de délimitation (17) du composant CFP (3) délimitant l'évidement (2), **caractérisé en ce que** cet élément de pression (13) présente en outre un élément d'isolation thermique (15) qui est agencé à l'extérieur du châssis (10), de sorte que la force de pression (F) puisse être transférée au composant CFP (3) adjacent via l'élément d'isolation thermique (15).

11. Dispositif de stabilisation (1) selon la revendication 10, **caractérisé en ce que** l'élément d'isolation thermique (15) est une plaque d'isolation thermique (16) et l'élément d'isolation thermique (15) est de préférence constitué d'un matériau céramique, d'un matériau polymère, d'un matériau CFP, d'un matériau en béton, d'un matériau en ciment, d'un béton avec fibre ou d'un mélange de matériaux susvisés.

12. Dispositif de stabilisation (1) selon la revendication 10 ou 11, **caractérisé en ce que** le châssis (10) est constitué d'un matériau polymère, d'un matériau CFP, d'un métal ou d'un mélange de matériaux susvisés.

13. Dispositif de stabilisation (1) selon l'une des revendications 10 à 12, **caractérisé en ce que** le châssis (10) a une section transversale essentiellement en forme de U ou essentiellement en forme de C.

14. Dispositif de stabilisation (1) selon l'une des revendications 10 à 13, **caractérisé en ce que** la forme de section transversale du châssis (10) se rétrécit vers l'ouverture (12).

15. Outil (24) pour assembler des composants en composite fibres-matière plastique (CFP) (3, 4), comprenant :
- une table (22), de préférence dotée d'un dispositif de maintien pour fixer un composant CFP (3, 4) ;
- un dispositif d'assemblage (25), en particulier un dispositif de soudage ;
- un dispositif de stabilisation (1) selon l'une des revendications 10 à 14.
